# FASCICULE DE BREVET EUROPEEN

(11) **EP 1 724 888 B1**
(45) Date de publication et mention de la délivrance du brevet: **29.02.2012**
(21) Numéro de dépôt: 06290685.4
(22) Date de dépôt: 28.04.2006
(51) Int. Cl.: H02B 1/42

(54) **Coffret modulable pour appareillages électriques**
Modulares Gehäuse für elektrische Geräte
Modular enclosure for electrical devices

(30) Priorité: 19.05.2005 FR 0505018
(43) Date de publication de la demande: 22.11.2006
(73) Titulaire: Legrand France, 87000 Limoges (FR); Legrand SNC, 87000 Limoges (FR)
(72) Inventeur: Araujo, Fernando, 87350 Panazol (FR); Auvray, Christophe, 87240 Saint Sylvestre (FR)
(74) Mandataire: Orsini, Fabienne

(56) Documents cités:
- EP-A- 0 651 482
- EP-A- 0 917 268
- DE-A1- 2 546 176
- FR-A- 2 797 106

## Description

### DOMAINE TECHNIQUE AUQUEL SE RAPPORTE L'INVENTION

La présente invention concerne de manière générale les coffrets pour appareillages électriques tels que, dans le domaine tertiaire, les coffrets de distribution électrique rapportés en saillie d'une paroi quelconque.

Elle concerne plus particulièrement un coffret comportant deux montants longitudinaux parallèles supportant des rails transversaux espacés à pas régulier.

### ARRIERE-PLAN TECHNOLOGIQUE

Actuellement les coffrets déjà connus de ce type sont des coffrets monoblocs qui présentent des tailles spécifiques fixes. Ils sont donc classés par capacité au rail de montage d'appareillages électriques.

En particulier on connaît du document EP 0 651 482 un coffret se présentant sous la forme d'un boîtier fermé à l'avant par un capot, ce boîtier renfermant des éléments de montage se présentant sous la forme de modules assemblés entre eux et fixés sur le fond plat du boîtier.

Ainsi, pour l'installateur, le choix d'un coffret exige l'étude préalable approfondie du volume des appareillages électriques à installer dans ce coffret.

Les coffrets thermoplastiques à trois ou quatre rails de montage sont des produits volumineux, coûteux à fabriquer, à emballer et à stocker.

Par ailleurs, actuellement, pour étendre une installation électrique existante, l'installateur se voit contraint à accoster au coffret de distribution en place un ou plusieurs coffrets supplémentaires à l'aide d'accessoires de jumelage.

« B »

Pour interconnecter les appareillages électriques contenus dans les coffrets jumelés, l'installateur est notamment obligé de défoncer des parties des habillages desdits coffrets qui se superposent ou se juxtaposent.

Cette opération de jumelage desdits coffrets est donc longue et coûteuse.

### OBJET DE L'INVENTION

Afin de remédier aux inconvénients précités de l'état de la technique, la présente invention propose un nouveau coffret modulable pour appareillages électriques à capacité variable et dont le montage est aisé.

« B» : À cet effet, on connaît du document EP 0 917 268, appartenant aux demanderesses, un châssis de support d'appareillages électriques qui comprend deux montants longitudinaux parallèles supportant au moins un rail transversal. Ici chaque montant longitudinal comprend, à chacune de ses extrémités, sur le bord transversal correspondant, une encoche en queue d'aronde destinée à recevoir une entretoise de jumelage permettant de coupler ledit montant avec un autre montant de même type disposé soit bout à bout avec lui, pour un jumelage verticale de deux châssis de support, soit côté à côte avec lui, pour un jumelage horizontal de ceux-ci.

Plus particulièrement, l'invention propose un coffret pour appareillages électriques tel que défini dans la revendication 1.

Ainsi, avantageusement, selon l'invention, chaque module qui supporte son capot d'habillage forme une unité indépendante dont les montants longitudinaux sont facilement assemblables à d'autres montants longitudinaux d'au moins un autre module fermé à l'avant par le capot d'habillage correspondant. Ainsi le coffret selon l'invention est un coffret gigogne dont l'extension est aisée.

D'autres caractéristiques avantageuses et non limitatives du coffret selon l'invention sont énoncées dans les revendications 2 à 22.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique partielle en perspective éclatée d'un mode de réalisation d'un coffret pour appareillages électriques selon l'invention ;
- la figure 2 est une vue de dessous du coffret de la figure 1 ;
- la figure 3 est une vue en perspective assemblée de la figure 1 ;
- la figure 4 est une vue identique à celle de la figure 3 sur laquelle ont été rajoutés les capots d'habillage du coffret d'appareillage électrique selon l'invention ;
- là figure 5 est une vue partielle en perspective éclatée des différents éléments d'un module du coffret d'appareillage électrique de la figure 1;
- la figure 6 est une vue de détail de la figure 3 montrant l'opération de démontage des modules du coffret d'appareillage électrique ;
- la figure 7 est une vue schématique partielle en perspective éclatée d'un autre mode de réalisation d'un coffret pour appareillages électriques selon l'invention :
- la figure 8 est une vue de dessous du coffret de la figure 7 ;
- la figure 9 est une vue en perspective assemblée de la figure 7 ;
- les figures 10A et 10B sont des vues schématiques en plan de deux variantes de réalisation du coffret d'appareillage électrique selon l'invention ; et
- la figure 11 est une vue schématique en perspective d'un coffret d'appareillage électrique selon l'invention monté sur une paroi quelconque.

En préliminaire, on notera que les éléments identiques ou similaires des différents modes de réalisation représentés sur les différentes figures seront dans la mesure du possible référencés par les mêmes signes de référence et ne seront pas décrits à chaque fois.

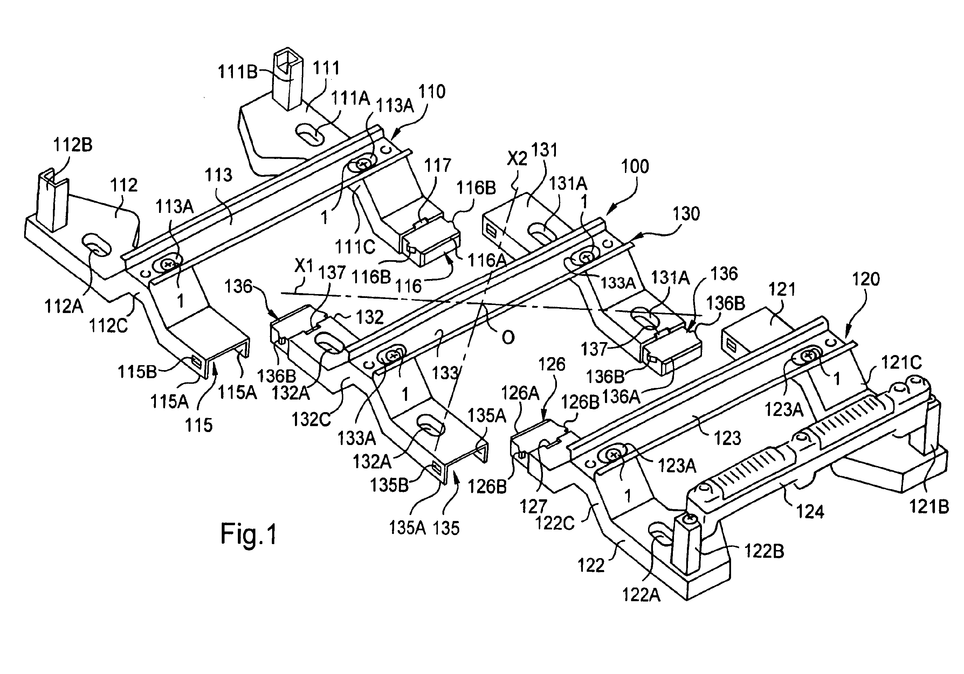

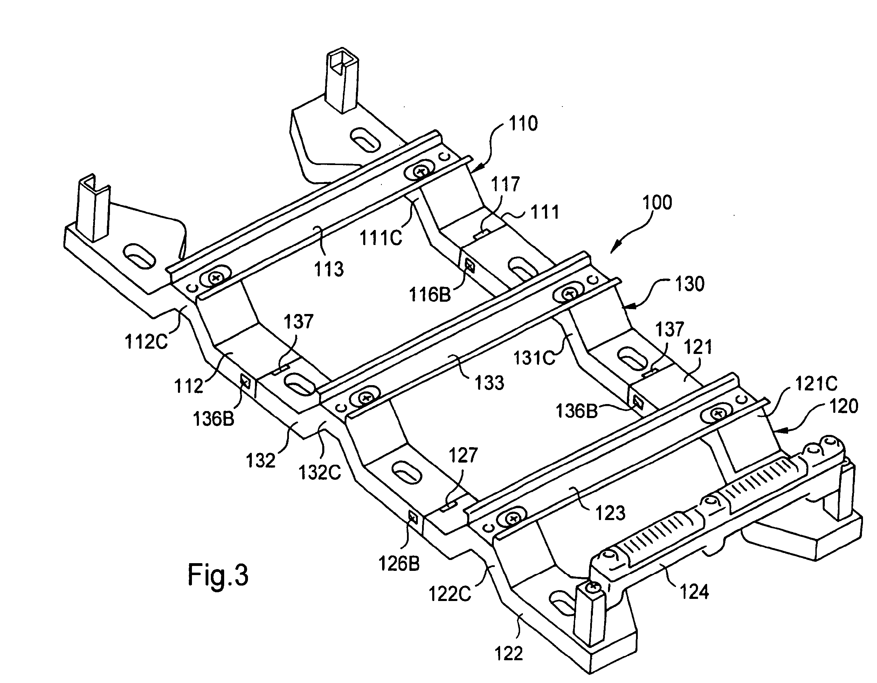

Sur les figures 1 à 6, on a représenté un premier mode de réalisation d'un coffret 100 pour appareillages électriques comprenant deux montants longitudinaux 101,102 parallèles supportant des rails transversaux 113, 123, 133 espacés d'un pas P1 régulier.

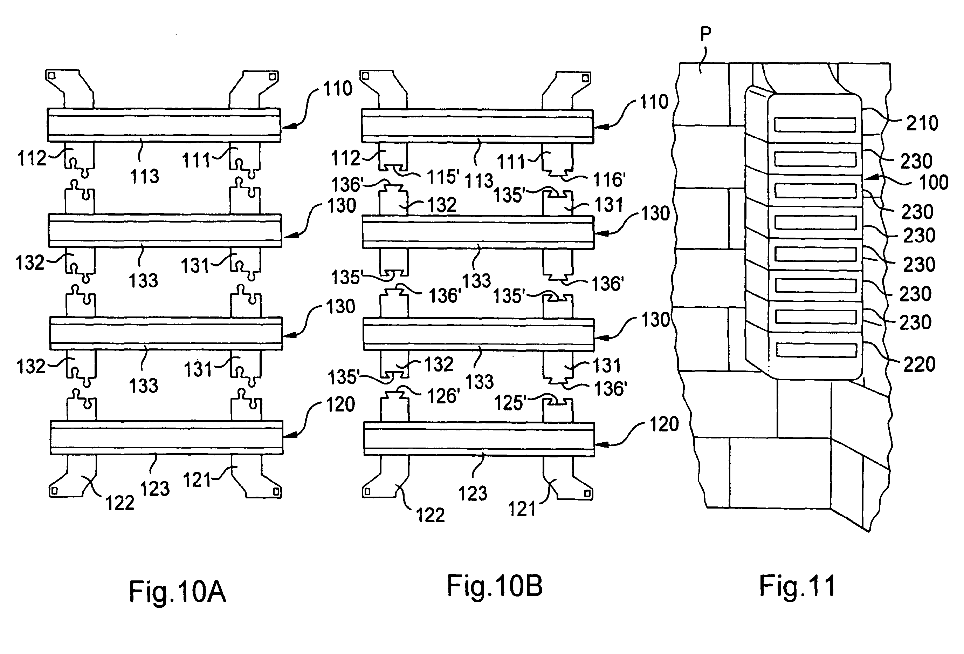

Comme le montre plus particulièrement la figure 11 un tel coffret 100 est destiné généralement à être positionné verticalement sur une paroi P comme un mur ou une cloison. Les montants longitudinaux du coffret 100 comportent à cet effet des trous oblong 112A,111A,131A,132A,121A,122A pour la fixation par vissage du coffret 100 à la paroi.

Le coffret 100 peut contenir différents types d'appareillages électriques montés sur les rails transversaux, tels que des disjoncteurs, des boîtiers de téléphone, des prises de courant et des interrupteurs.

Avantageusement, comme le montrent plus particulièrement les figures 1 à 3, il comprend au moins deux modules 110,120 adaptés à être assemblés l'un avec l'autre, chaque module 110,120 comportant deux montants longitudinaux 111,112,121,122 parallèles supportant au moins un rail transversal 113,123, positionné à équidistance des extrémités de chaque montant longitudinal, chacun desdits montants longitudinaux 111,112,121,122 d'un module 110,120 comportant au moins à une extrémité des moyens d'assemblage 115,116 adaptés à coopérer avec des moyens d'assemblage complémentaires 125,126 prévus à une extrémité d'un montant d'un autre module.

Ici, le coffret 100 comprend outre les deux premiers modules 110,120, un module intermédiaire 130 positionné entre ceux-ci.

Le module intermédiaire 130 comporte également deux montants longitudinaux 131,132 parallèles supportant un rail transversal 133 positionné à équidistance des extrémités de chaque montant longitudinal, chacun desdits montant longitudinaux 131,132 du module intermédiaire 130 comprenant à chaque extrémité des moyens d'assemblage 135,136 adaptés à coopérer avec des moyens d'assemblage complémentaires 116,115,125,126 prévus à une extrémité ici d'un montant longitudinal des deux premiers modules 110,120 ou d'un montant longitudinal d'un autre module intermédiaire du même type.

Les montants longitudinaux 111,112,121,122,131,132 des premiers modules 110,120 et du module intermédiaire 130 sont des profilés réalisés chacun d'une seule pièce par moulage d'une matière plastique.

Les montants longitudinaux 111,112,121,122,131,132 des premiers modules 110,120 et du module intermédiaire 130 sont tous de même longueur.

Les rails transversaux 113,133,123 sont des profilés métalliques fixés par vissage aux montants longitudinaux respectifs des modules 110,120,130.

À cet effet, chaque montant longitudinal 111,112,121,122,132,133 de chaque module comporte une partie surélevée 111C,112C,121C,122C,131C, 132C pourvue de moyens de fixation du rail transversal correspondant.

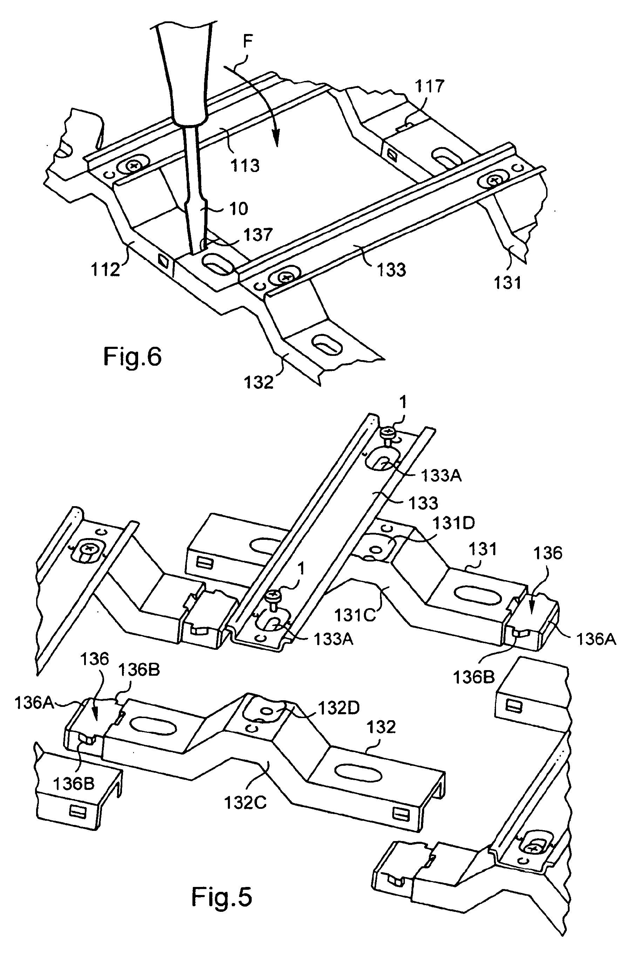

Ici, comme le montre plus particulièrement la figure 5, ces moyens de fixation comportent au sommet de la partie surélevée correspondante du montant longitudinal, une cuvette 131D,132D de forme oblongue comportant un trou taraudé dans lequel vient se visser une vis 1 traversant un trou oblong 133A prévu au fond du rail transversal 133 correspondant.

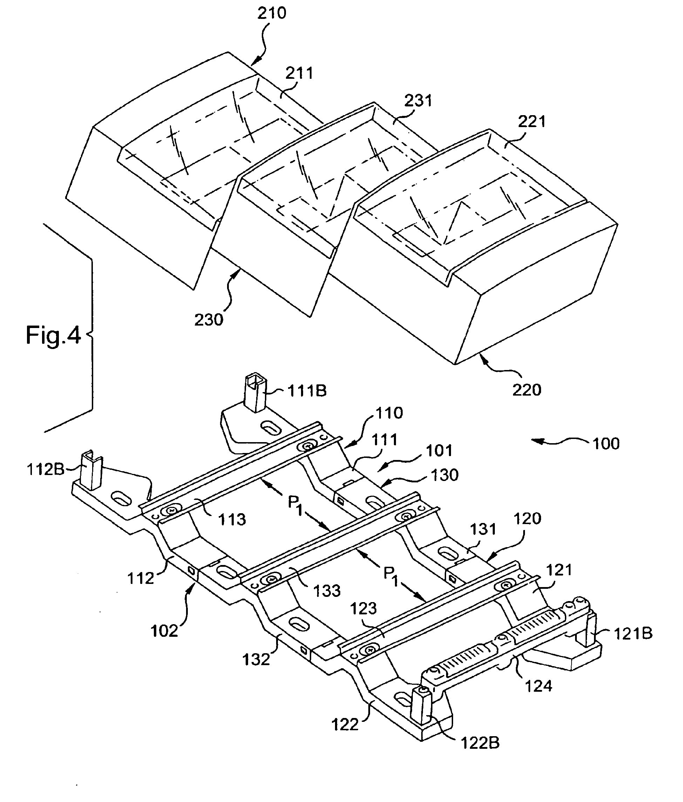

Les deux premiers modules 110,120 du coffret 100 comportent à une extrémité de leurs montants longitudinaux 111,112,121,122, des cheminées 111B,112B,121B,122B destinées, d'une part, au montage du ou des capots d'habillage 210,220 ( voir figure 4), et, d'autre part, à la fixation d'un bornier 124 de connexion électrique auquel sont connectés électriquement les différents appareillages électriques non représentés rapportés sur les rails transversaux 113,123,133 correspondants.

Avantageusement, comme le montrent les figures, ici, les différents moyens d'assemblage 115,116,125,126,135,136 des différents montants longitudinaux des modules 110,120,130 sont des moyens d'assemblage par coopération de forme.

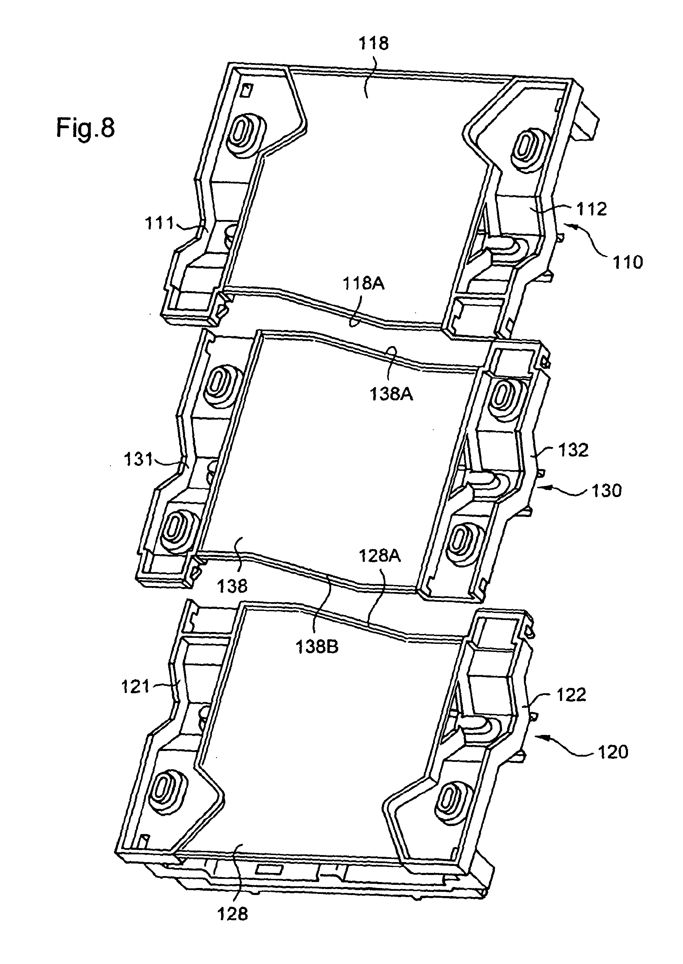

Avantageusement, selon les modes de réalisation représentés sur les figures 1 à 9, ces moyens d'assemblage par coopération de forme sont des moyens d'encliquetage.

Chaque module 110,120,130 du coffret 100 comporte un montant longitudinal 111,122,131,132 pourvu à une extrémité d'un moyen d'assemblage mâle 116,126,136 et un montant longitudinal 112,121,131,132 pourvu à une extrémité d'un moyen d'assemblage femelle 115,125,135.

Les moyens d'assemblage mâle 116,126,136 et femelle 115,125,135 des montants longitudinaux 111,112,121,122,131,132 d'un module 110,120,130 sont agencés symétriquement par rapport aux moyens d'assemblage mâle et femelle 116,126,136,115,125,135 des montants longitudinaux du module suivant de sorte que le moyen d'assemblage mâle 116,126,136 d'un module 110,120,130 soit apte à coopérer avec le moyen d'assemblage femelle 115,125,135 du module 110,120,130 suivant.

Plus particulièrement, le premier module 110 comporte à une extrémité d'un montant longitudinal 111 un moyen d'assemblage mâle 116 et à une extrémité située du même côté du rail transversal 113 de l'autre montant longitudinal 112 un moyen d'assemblage femelle 125.

Ledit moyen d'assemblage mâle 116 est ici destiné à coopérer avec un moyen d'assemblage femelle 135 d'un montant longitudinal 131 du module intermédiaire 130 et ledit moyen d'assemblage femelle 115 est ici destiné à coopérer avec un moyen d'assemblage mâle 136 de l'autre montant longitudinal 132 du module intermédiaire 130.

L'autre premier module 120 comporte également à une extrémité d'un de ses montants longitudinaux 121 un moyen d'assemblage femelle 125 adapté à coopérer avec un moyen d'assemblage mâle 136 d'un montant longitudinal 131 du module intermédiaire 130 et à l'extrémité située du même côté du rail transversal 123 de l'autre montant longitudinal 122 un moyen d'assemblage mâle 126 destiné à coopérer avec le moyen d'assemblage femelle 135 prévu à l'extrémité correspondante de l'autre montant longitudinal 132 du module intermédiaire 130.

Comme le montre la figure 1, les moyens d'assemblage mâle et femelle des montants longitudinaux des premiers modules 110,120 peuvent coopérer entre eux pour former un coffret de plus petite hauteur puisque ces moyens d'assemblage mâle et femelle sont agencés symétriquement l'un par rapport à l'autre pour se faire face et correspondre l'un avec l'autre.

En outre, comme cela vient d'être décrit précédemment, chaque montant longitudinal 131,132 de chaque module intermédiaire 130 du coffret 100 comporte à une extrémité un moyen d'assemblage mâle 136 et à l'autre extrémité un moyen d'assemblage femelle 135.

Les deux extrémités de chaque montant longitudinal 131,132 du module intermédiaire 130 viennent en correspondance des extrémités des montants longitudinaux des modules précédent et suivant ce module intermédiaire.

Ainsi, les moyens d'assemblage mâle d'une part et les moyens d'assemblage femelle d'autre part des montants longitudinaux 131,132 de chaque module intermédiaire 130 sont disposés symétriquement par rapport au point d'intersection O de deux droites bissectrices X1, X2 passant par les couples d'extrémité desdits montants longitudinaux 131,132 situés de part et d'autre dudit rail transversal 133.

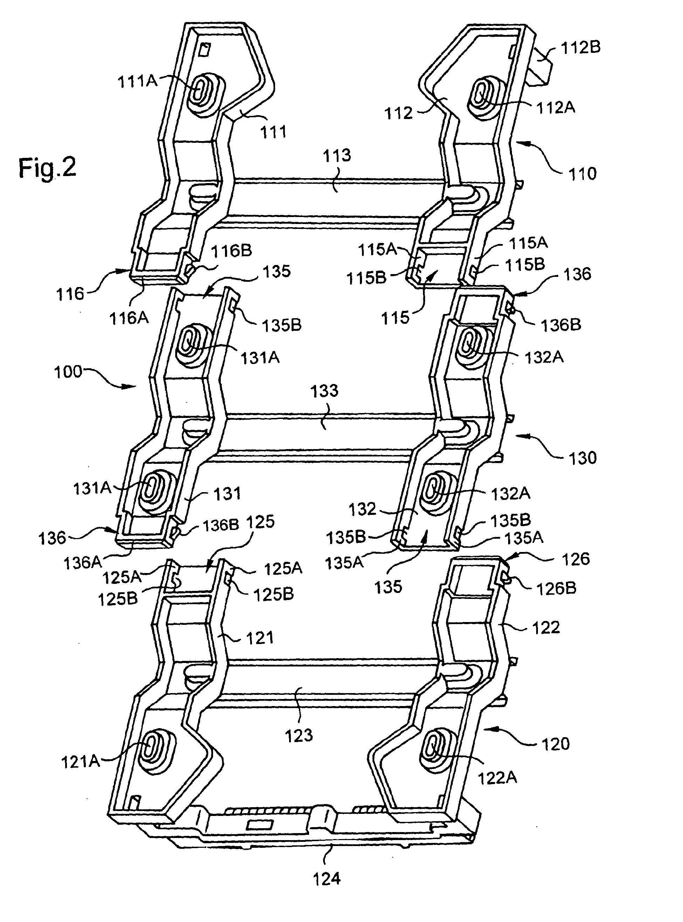

Comme le montrent plus particulièrement les figures 1 et 2, selon l'exemple de réalisation représenté, chaque moyen d'assemblage mâle 116,126,136 comprend un embout dont l'extrémité libre 116A,126A,136A est chanfreinée et portant sur deux côtés latéraux opposés des dents d'encliquetage 116B,126B,136B en saillie.

Chaque moyen d'assemblage femelle 115,125,135 comporte un logement destiné à recevoir ledit embout 116,126,136, dont deux parois latérales 115A,125A,135A en regard comportant des fenêtres 115B,125B,135B d'insertion desdites dents d'encliquetage 116A,126A,136A.

L'extrémité chanfreinée de chaque embout 116,126,136 permet de faciliter son insertion dans le logement 115,125,135 correspondant.

En outre, comme le montrent plus particulièrement les figures 1 et 6, il est prévu à la base de chaque embout 116,126,136, une encoche 117,127,137 accessible à l'usager après insertion dudit embout dans le logement correspondant (voir figure 6).

Cette encoche 117,127,137 est destinée à recevoir la pointe 10 d'un outil, ici un tournevis, qui permet par basculement selon la flèche F de désassembler lesdits moyens d'assemblage mâle et femelle des montants longitudinaux 112,132 correspondants des modules 110,130 du coffret 100.

Les montants longitudinaux 111,112,121,122,131,132 de chaque module 110,120,130 forme une seule pièce avec leurs moyens d'assemblage 116,115,125,126,135,136.

Avantageusement, le coffret 100 comporte au moins un capot d'habillage 210,230,220 à rapporter sur les montants longitudinaux des modules correspondants (voir figure 4).

Ici, préférentiellement, II est prévu un capot d'habillage 210,220,230 par module 110,120,130. Chaque capot d'habillage est une boîte en matière plastique rapportée par clipsage ou tout autre moyen sur les montants longitudinaux des modules.

Les capots d'habillage 210,220 des premiers modules 110,120 forment les parois de dessus et de dessous du coffret 100. Le capot d'habillage 230 du module intermédiaire 130 comporte deux ouvertures latérales en regard l'une de l'autre.

Chaque capot d'habillage 210,220,230 porte en façade une ouverture d'accès aux appareillages électriques montés sur le rail transversal du module correspondant, cette ouverture d'accès étant fermée par un volet de fermeture 211,231,221 monté à pivotement sur ledit capot.

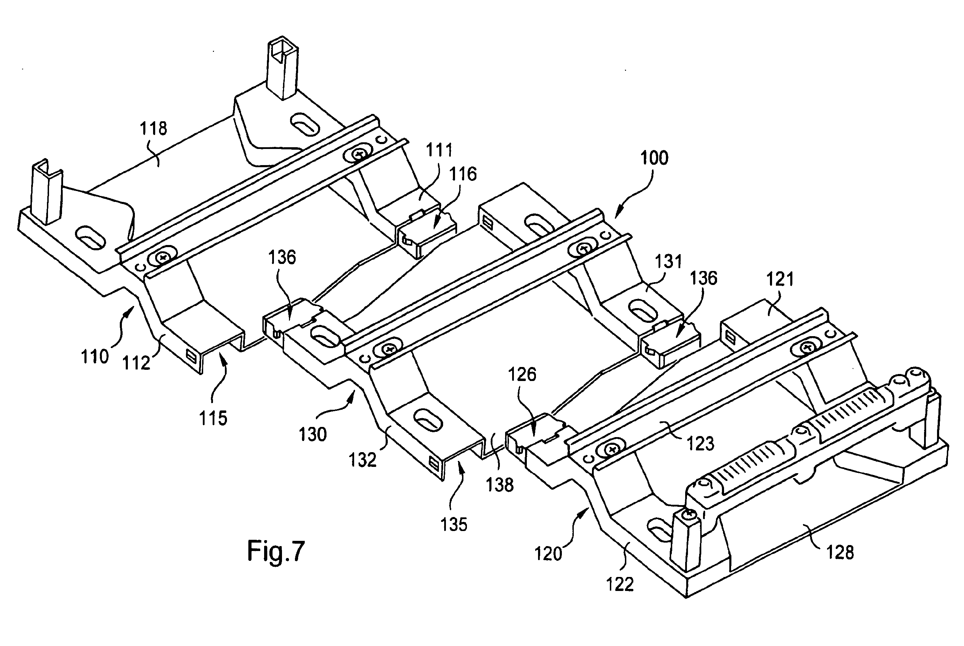

Selon une variante de réalisation préférentielle du coffret 100 représentée sur les figures 7 à 9, chaque module 110,120,130 comporte une paroi de fond 118,128,138 qui s'étend d'un montant longitudinal 111,121,131 à l'autre 112,121,132 derrière le rail transversal 113,123,133.

Ladite paroi de fond 118,128,138 et les deux montants longitudinaux 111,112,121,122,131,132 de chaque module 110,120,130 forment une seule pièce monobloc obtenue par moulage d'une matière plastique.

Avantageusement cette paroi de fond 118,128,138 comporte un bord 118A,128A,138A,138B suivant une ligne brisée permettant de donner un sens de montage audit module. Le bord en ligne brisée de la paroi de fond 118,128,138 forme alors un moyen de détrompage pour guider l'assemblage desdits modules entre eux.

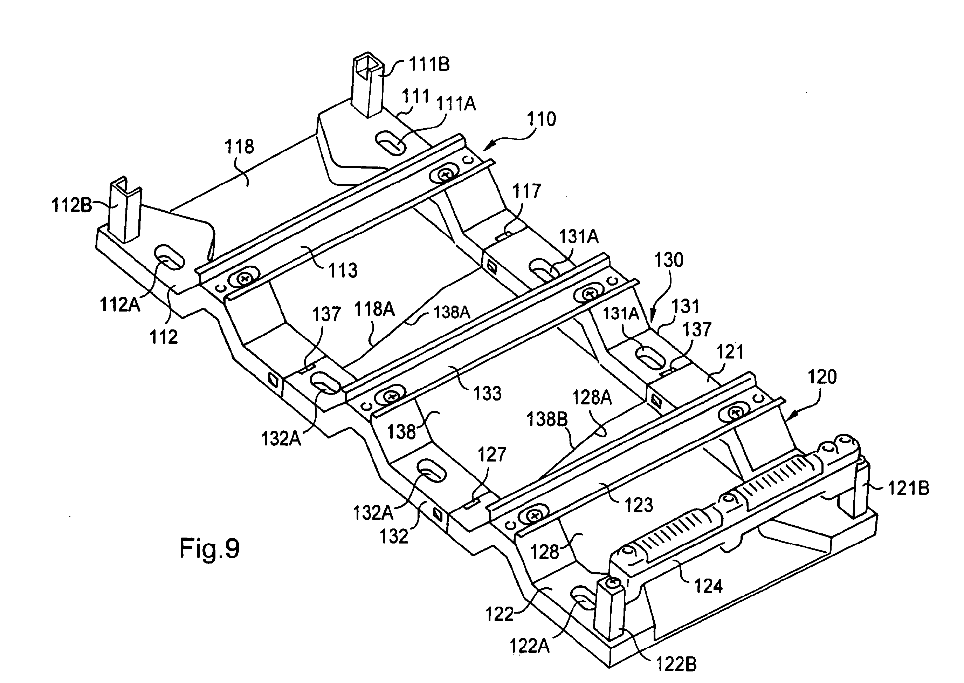

En effet, lors de l'assemblage des modules 110,120,130 les bords 118A,128A,138A,138B des différentes parois de fond 118,128,138 coopèrent entre eux pour que les parois de fond 118,1128,138 desdits modules forment une paroi de fond continue du coffret 100 (voir figure 9).

Sur les figures 10A et 10B on a représenté des coffrets 100 pour appareillages électriques selon l'invention comportant les deux premiers modules 110,120 et deux modules intermédiaires 130 positionnés entre ces premiers modules. Les montants longitudinaux 111,112,121,122,131,132 de chacun des modules 110,120,130 comportent des variantes de moyens d'assemblage.

Selon le mode de réalisation représenté sur la figure 10A les moyens d'assemblage sont des tétons coopérant avec des logements, et selon le mode de réalisation représenté sur la figure 10B les moyens d'assemblage 115',116',125',126',135',136' présentent une forme en queue d'aronde.

Le coffret 100 selon l'invention présente avantageusement une hauteur et une capacité modulables. Après avoir configuré son coffret 100, l'installateur peut facilement ajouter un module intermédiaire 130 pour augmenter la hauteur et la capacité du coffret 100. Pour cela, il lui suffit de démonter un module d'extrémité 110,120 pour adjoindre par encliquetage un autre module intermédiaire 130 à un module intermédiaire 130 déjà existant ou à l'un des modules d'extrémité. La hauteur et la capacité du coffret 100 n'est donc pas fixée. Le montage des différents modules entre eux par coopération de forme et en particulier par encliquetage est aisé.

La présente invention n'est nullement limitée aux modes de réalisation décrits et représentés, mais l'homme du métier saura y apporter toute variante conforme à son esprit.

## Revendications

1. Coffret (100) pour appareillages électriques comprenant deux montants longitudinaux parallèles supportant des rails transversaux espacés à pas régulier, ledit coffret comprenant au moins deux modules (110,120) adaptés à être assemblés l'un avec l'autre, chaque module (110,120) comportant deux montants longitudinaux (111,112,121,122) parallèles supportant au moins un rail transversal (113,123), chacun desdits montants longitudinaux (111,112,121,122) d'un module (110,120) comportant au moins à une extrémité des moyens d'assemblage (115,116,125,126) adaptés à coopérer avec des moyens d'assemblage complémentaires (115,116,125,126,135,136) prévus à une extrémité d'un montant longitudinal (111,112,121,122,131,132) d'un autre module (110,120,130), **caractérisé en ce que** chaque module (110,120,130) comporte un capot d'habillage (210,230,220) rapporté sur les montants longitudinaux du module (110,130,120) correspondant.

2. Coffret (100) selon la revendication 1, **caractérisé en ce que** chaque capot d'habillage (210,220,230) comporte en façade une ouverture d'accès aux appareillages électriques montés sur le rail transversal et un volet de fermeture (211,221,231) de cette ouverture d'accès monté à pivotement sur ledit capot.

3. Coffret (100) selon l'une des revendications précédentes, **caractérisé en ce que** chaque module comporte une paroi de fond (118,128,138) qui s'étend d'un montant longitudinal à l'autre derrière chaque rail transversal.

4. Coffret (100) selon la revendication 3, **caractérisé en ce que** chaque paroi de fond (118,128,138) comporte au moins un bord (118A,128A,138A,138B) suivant une ligne brisée, ledit bord formant un moyen de détrompage pour l'assemblage desdits modules entre eux.

5. Coffret selon l'une des revendications 3 et 4, **caractérisé en ce que** ladite paroi de fond et les deux montants longitudinaux de chaque module (110,120,130) forment une seule pièce monobloc.

6. Coffret (100) selon l'une des revendications précédentes, **caractérisé en ce que** les montants longitudinaux (111,112,121,122,131,132) de tous les modules (110,120 130) dudit coffret sont tous de même longueur.

7. Coffret (100) selon l'une des revendications précédentes, **caractérisé en ce qu'**il comprend au moins un module intermédiaire (130) positionné entre deux premiers modules (110,120), chaque module intermédiaire comportant deux montants longitudinaux (131,132) parallèles supportant au moins un rail transversal (133), chacun desdits montants longitudinaux du module intermédiaire comprenant à chaque extrémité des moyens d'assemblage (135,136) adaptés à coopérer avec des moyens d'assemblage complémentaires prévus à une extrémité d'un montant d'un autre module intermédiaire ou d'un des deux premiers modules.

8. Coffret (100) selon l'une des revendications précédentes, **caractérisé en ce que** lesdits moyens d'assemblage et lesdits moyens d'assemblage complémentaires sont des moyens d'assemblage par coopération de forme.

9. Coffret (100) selon la revendication 8, **caractérisé en ce que** lesdits moyens d'assemblage (115,116,125,126,135,136) par coopération de forme sont des moyens d'encliquetage.

10. Coffret (100) selon l'une des revendications 8 et 9, **caractérisé en ce que** chaque module (110,120,130) comporte un montant longitudinal pourvu à une extrémité d'un moyen d'assemblage mâle (116,126,136) et un montant longitudinal pourvu à une extrémité d'un moyen d'assemblage femelle (115,125,135).

11. Coffret (100) selon la revendication 10, **caractérisé en ce que** les moyens d'assemblage mâle et femelle (115,116,125,126,135,136) des montants longitudinaux (111,112,121,122,131,132) d'un module (110,120,130) sont agencés symétriquement par rapport aux moyens d'assemblage mâle et femelle (115,116,125,126,135,136) des montants longitudinaux du module suivant de sorte que le moyen d'assemblage mâle d'un module soit apte à coopérer avec le moyen d'assemblage femelle du module suivant.

12. Coffret (100) selon l'une des revendications 8 et 9, **caractérisé en ce que** les deux montants longitudinaux d'un module sont pourvus à leur extrémité d'un moyen d'assemblage mâle et les deux montants longitudinaux du module suivant sont pourvus à leur extrémité d'un moyen d'assemblage femelle.

13. Coffret (100) selon la revendication 7, **caractérisé en ce que** chaque montant longitudinal (131,132) de chaque module intermédiaire (130) comporte à une extrémité un moyen d'assemblage mâle (136) et à l'autre extrémité un moyen d'assemblage femelle (135).

14. Coffret (100) selon la revendication 13, **caractérisé en ce que** les moyens d'assemblage mâles (136) d'une part et les moyens d'assemblage femelles (135) d'autre part des montants longitudinaux (131,132) de chaque module intermédiaire (130) sont disposés symétriquement par rapport au point d'intersection (O) de deux droites (X1,X2) passant par les couples d'extrémités desdits montants longitudinaux situées de part et d'autre dudit rail transversal (133).

15. Coffret (100) selon l'une des revendications 10 à 14, **caractérisé en ce que** chaque moyen d'assemblage mâle comprend un embout (116,126,136) dont l'extrémité (116A,126A,136A) est chanfreinée, portant sur deux côtés latéraux opposés des dents d'encliquetage (116B,126B,136B) en saillie et chaque moyen d'assemblage femelle comporte un logement (115,125,135) destiné à recevoir ledit embout, dont deux parois latérales en regard (115A,125A,135A) comportent des fenêtres (115B,125B,135B) d'insertion desdites dents d'encliquetage.

16. Coffret (100) selon la revendication 15, **caractérisé en ce qu'**il est prévu à la base de chaque embout une encoche (117,127,137) accessible à l'usager après l'insertion dudit embout dans le logement correspondant, ladite encoche étant destinée à recevoir la pointe (10) d'un outil pour désassembler lesdits moyens d'assemblage mâle et femelle.

17. Coffret (100) selon l'une des revendications précédentes, **caractérisé en ce que** lesdits moyens d'assemblages (115',116',125',126',135',136') présentent une forme en queue d'aronde.

18. Coffret (100) selon l'une quelconque des revendications précédentes, **caractérisé en ce que** chaque rail transversal (113,123,133) est rapporté sur chaque montant longitudinal (111,112,121,1222,131,132) de chaque module (110,120,130).

19. Coffret (100) selon la revendication 18, **caractérisé en ce que** chaque montant longitudinal de chaque module comporte une partie surélevée (111C,112C,121C,1222C,131C,132C) pourvue de moyens de fixation du rail transversal correspondant.

20. Coffret (100) selon l'une des revendications 18 et 19 **caractérisé en ce que** les moyens de fixation de chaque rail transversal sont des moyens de vissage.

21. Coffret (100) selon l'une des revendications précédentes, **caractérisé en ce que** chaque montant longitudinal de chaque module comporte des trous allongés (111A,112A,121A.122A,122A.131A,132A)de passage de vis de fixation du coffret à une paroi quelconque.

22. Coffret (100) selon l'une des revendications précédentes, **caractérisé en ce que** chaque montant longitudinal de chaque module forme une seule pièce avec ses moyens d'assemblage.

## Claims

1. A pattress (100) for electrical equipment, said pattress comprising two parallel longitudinal uprights that support transverse rails that are spaced apart at a regular pitch, said pattress comprising at least two modules (110, 120) that are adapted to be assembled together, each module (110, 120) comprising two parallel longitudinal uprights (111, 112, 121, 122) that support at least one transverse rail (113, 123), each of said longitudinal uprights (111, 112, 121, 122) of a module (110, 120) including, at at least one end, assembly means (115, 116, 125, 126) that are adapted to co-operate with complementary assembly means (115, 116, 125, 126, 135, 136) that are provided at one end of a longitudinal upright (111, 112, 121, 122, 131, 132) of another module (110, 120, 130), said pattress being **characterized in that** each module (110, 120, 130) includes a cover (210, 230, 220) that is fitted onto the longitudinal uprights of the corresponding module (110, 130, 120).

2. A pattress (100) according to claim 1, **characterized in that** each cover (210, 220, 230) includes in a front face both an access opening for accessing the electrical equipment that is mounted on the transverse rail, and a closure flap (211, 221, 231) for closing the access opening, which closure flap is pivotally mounted on said cover.

3. A pattress (100) according to either preceding claim, **characterized in that** each module includes a back wall (118, 128, 138) that extends from one longitudinal upright to the other, behind each transverse rail.

4. A pattress (100) according to claim 3, **characterized in that** each back wall (118, 128, 138) includes at least one edge (118A, 128A, 138A, 138B) that follows a zigzag line, said edge forming keying means for assembling said modules together.

5. A pattress according to claim 3 or claim 4, **characterized in that** said back wall and the two longitudinal uprights of each module (110, 120, 130) form a single piece.

6. A pattress (100) according to any preceding claim, **characterized in that** the longitudinal uprights (111, 112, 121, 122, 131, 132) of all the modules (110, 120, 130) of said pattress are all the same length.

7. A pattress (100) according to any preceding claim, **characterized in that** it includes at least one intermediate module (130) that is positioned between two first modules (110, 120), each intermediate module comprising two parallel longitudinal uprights (131, 132) that support at least one transverse rail (133), each of said longitudinal uprights of the intermediate module including, at each end, assembly means (135, 136) that are adapted to co-operate with complementary assembly means that are provided at one end of an upright of another intermediate module, or of one of the two first modules.

8. A pattress (100) according to any preceding claim, **characterized in that** said assembly means and said complementary assembly means are shape-cooperation assembly means.

9. A pattress (100) according to claim 8, **characterized in that** said shape-cooperation assembly means (115, 116, 125, 126, 135, 136) are snap-fastener means.

10. A pattress (100) according to claim 8 or claim 9, **characterized in that** each module (110, 120, 130) includes a longitudinal: upright that is provided, at one end, with male assembly means (116, 126, 136), and a longitudinal upright that is provided at one end with female assembly means (115, 125, 135).

11. A pattress (100) according to claim 10, **characterized in that** the male and female assembly means (115, 116, 125, 126, 135, 136) of the longitudinal uprights (111, 112, 121, 122, 131, 132) of one module (110, 120, 130) are arranged symmetrically relative to the male and female assembly means (115, 116, 125, 126, 135, 136) of the longitudinal uprights of the following module, such that the male assembly means of one module are capable of co-operating with the female assembly means of the following module.

12. A pattress (100) according to claim 8 or claim 9, **characterized in that** the two longitudinal uprights of one module are provided at their ends with male assembly means, and the two longitudinal uprights of the following module are provided at their ends with female assembly means.

13. A pattress (100) according to claim 7, **characterized in that** each longitudinal upright (131, 132) of each intermediate module (130) includes, at one end, male assembly means (136), and, at the other end, female assembly means (135).

14. A pattress (100) according to claim 13, **characterized in that** the male assembly means (136) and the female assembly means (135) of the longitudinal uprights (131, 132) of each intermediate module (130) are respectively arranged symmetrically about the point of intersection (0) of two straight lines (X1, X2) passing through the pairs of ends of said longitudinal uprights situated on either side of said transverse rail (133).

15. A pattress (100) according to any one of claims 10 to 14, **characterized in that** each male assembly means comprises an endpiece (116, 126, 136) having an end (116A, 126A, 136A) that is chamfered, and carrying, on two opposite lateral sides, projecting snap-fastener teeth (116B, 126B, 136B), and each female assembly means comprises a housing (115, 125, 135) for receiving said endpiece, said housing having two facing side walls (115A, 125A, 135A) that include insertion windows (115B, 125B, 135B) into which said snap-fastener teeth are inserted.

16. A pattress (100) according to claim 15, **characterized in that** a notch (117, 127, 137) is provided at the base of each endpiece, which notch is accessible to the user after said endpiece has been inserted in its corresponding housing, said notch being for receiving the tip (10) of a tool for separating said male and female assembly means.

17. A pattress (100) according to any preceding claim, **characterized in that** said assembly means (115', 116', 125', 126', 135', 136') present a dovetail shape.

18. A pattress (100) according to any preceding claim, **characterized in that** each transverse rail (113, 123, 133) is fitted onto each longitudinal upright (111, 112, 121, 122, 131, 132) of each module (110, 120, 130).

19. A pattress (100) according to claim 18, **characterized in that** each longitudinal upright of each module includes a raised portion (111C, 112C, 121C, 122C, 131C, 132C) that is provided with fastener means for fastening the corresponding transverse rail.

20. A pattress (100) according to claim 18 or claim 19, **characterized in that** the fastener means for fastening each transverse rail are screw-fastener means.

21. A pattress (100) according to any preceding claim, **characterized in that** each longitudinal upright of each module includes elongate holes (111A, 112A, 121A, 122A, 122A, 131A 132A) through which fastener screws can pass for fastening the pattress to any wall.

22. A pattress (100) according to any preceding claim, **characterized in that** each longitudinal upright of each module is formed integrally with its assembly means.

## Patentansprüche

1. Kasten (100) für elektrische Geräte mit zwei parallelen Längshalterungen zum Halten von gleichmäßig beabstandeten Querschienen, wobei der Kasten mindestens zwei Module (110, 120) umfasst, die zusammen montiert werden können, wobei jedes Modul (110, 120) zwei parallele Längshalterungen (111, 112, 121, 122) zum Halten von mindestens einer Querschiene (113, 123) umfasst und jede dieser Längshalterungen (111, 112, 121, 122) eines Moduls (110, 120) mindestens an einem Ende Montagemittel (115, 116, 125, 126) umfasst, die mit den sich ergänzenden, an einem Ende einer Längshalterung (111, 112, 121, 122, 131, 132) eines anderen Moduls (110, 120, 130) vorgesehenen Montagemitteln (115, 116, 125, 126, 135, 136) zusammenwirken können, **dadurch gekennzeichnet, dass** jedes Modul (110, 120, 130) eine auf den Längshalterungen des entsprechenden Moduls (110, 130, 120) aufgesteckte Verkleidungsabdeckung (210, 230, 220) umfasst.

2. Kasten (100) nach Anspruch 1, **dadurch gekennzeichnet, dass** jede Verkleidungsabdeckung (210, 220, 230) an der Vorderseite eine Zugangsöffnung für die auf der Querschiene montierten elektrischen Geräte und eine Verschlussklappe (211, 221, 231) für diese Zugangsöffnung umfasst, die schwenkbar auf dieser Abdeckung montiert ist.

3. Kasten (100) nach einem der vorausgehenden Ansprüche, **dadurch gekennzeichnet, dass** jedes Modul eine Bodenwand (118, 128, 138) umfasst, die sich hinter jeder Querschiene von einer Längshalterung zur anderen erstreckt.

4. Kasten (100) nach Anspruch 3, **dadurch gekennzeichnet, dass** jede Bodenwand (118, 128, 138) mindestens einen Rand (118A, 128A, 138A, 138B) entlang einer gebrochenen Linie umfasst, wobei dieser Rand für die Montage der beiden Module miteinander eine Verwechslungssicherung bildet.

5. Kasten nach einem der Ansprüche 3 und 4, **dadurch gekennzeichnet, dass** die Bodenwand und die beiden Längshalterungen jedes Moduls (110, 120, 130) ein einziges Einzelblockteil bilden.

6. Kasten (100) nach einem der vorausgehenden Ansprüche, **dadurch gekennzeichnet, dass** die Längshaflerungen (111, 112, 121, 122, 131, 132) aller Module (110, 120, 130) des Kastens alle die gleiche Länge haben.

7. Kasten (100) nach einem der vorausgehenden Ansprüche, **dadurch gekennzeichnet, dass** er mindestens ein zwischen zwei ersten Modulen (110, 120) positioniertes Zwischenmodul (130) umfasst, wobei jedes Zwischenmodul zwei parallele Längshalterungen (131, 132) mit mindestens einer Querschiene (133) umfasst und jede dieser Längshalterungen des Zwischenmoduls an jedem Ende Montagemittel (135, 136) umfasst, die mit den sich ergänzenden Montagemitteln an einem Ende einer Halterung eines anderen Zwischenmoduls oder eines der beiden ersten Module zusammenwirken können.

8. Kasten (100) nach einem der vorausgehenden Ansprüche, **dadurch gekennzeichnet, dass** die Montagemittel und die ergänzenden Montagemittel formschlüssige Montagemittel sind.

9. Kasten (100) nach Anspruch 8, **dadurch gekennzeichnet, dass** die formschlüssigen Montagemittel (115, 116, 125, 126, 135, 136) Einrastmittel sind.

10. Kasten (100) nach einem der Ansprüche 8 und 9, **dadurch gekennzeichnet, dass** jedes Modul (110, 120, 130) eine Längshalterung mit an einem Ende einem Montagemittel zum Einstecken (116, 126, 136) sowie eine Längshalterung mit an einem Ende einem Montagemittel zur Aufnahme (115, 125, 135) umfasst.

11. Kasten (100) nach Anspruch 10, **dadurch gekennzeichnet, dass** die Montagemittel zum Einstecken und zur Aufnahme (115, 116, 125, 126, 135, 136) der Längshalterungen (111, 112, 121, 122, 131, 132) eines Moduls (110, 120, 130) in Bezug zu den Montagemitteln zum Einstecken und zur Aufnahme (115, 116, 125, 126, 135, 136) der Längshalterungen des nächsten Moduls symmetrisch angeordnet sind, sodass das Montagemittel zum Einstecken eines Moduls mit dem Montagemittel zur Aufnahme des nächsten Moduls zusammenwirken kann.

12. Kasten (100) nach einem der Ansprüche 8 und 9, **dadurch gekennzeichnet, dass** die beiden Längshalterungen eines Moduls an ihrem Ende mit einem Montagemittel zum Einstecken und die beiden Längshalterungen des nächsten Moduls an ihrem Ende mit einem Montagemittel zur Aufnahme versehen sind.

13. Kasten (100) nach Anspruch 7, **dadurch gekennzeichnet, dass** jede Längshalterung (131, 132) jedes Zwischenmoduls (130) an einem Ende ein Montagemittel zum Einstecken (136) und an dem anderen Ende ein Montagemittel zur Aufnahme (135) umfasst.

14. Kasten (100) nach Anspruch 13, **dadurch gekennzeichnet, dass** einerseits die Montagemittel zum Einstecken (136) und andererseits die Montagemittel zur Aufnahme (135) der Längshalterungen (131, 132) jedes Zwischenmoduls (130) in Bezug zum Schnittpunkt (O) von zwei Geraden (X1,X2), die durch die beiden Enden der Längshalterungen laufen, die sich auf beiden Seiten der Querschiene (133) befinden, symmetrisch angeordnet sind.

15. Kasten (100) nach einem der Ansprüche 10 bis 14, **dadurch gekennzeichnet, dass** jedes Montagemittel zum Einstecken ein Endstück (116, 126, 136) umfasst, dessen Ende (116A, 126A, 136A) abgefast ist und auf zwei den überstehenden Einrastzähnen (116B, 126B, 136B) entgegengesetzten Seiten aufliegt und dass jedes Montagemittel zur Aufnahme eine Aufnahme (115, 125, 135) zur Aufnahme des Endstücks umfasst, wobei zwei gegenüberliegende Seitenwände (115A, 125A, 135A) Fenster (115B, 125B, 135B) zum Einsetzen der Einrastzähne umfassen.

16. Kasten (100) nach Anspruch 15, **dadurch gekennzeichnet, dass** am Ansatz jedes Endstücks eine Einkerbung (117, 127, 137) vorgesehen ist, die für den Anwender nach dem Einsetzen des Endstücks in die enstprechende Aufnahme zugänglich ist, wobei diese Einkerbung zur Aufnahme einer Werkzeugspitze (10) dient, um die Montagemittel zum Einstecken und zur Aufnahme voneinander zu trennen.

17. Kasten (100) nach einem der vorausgehenden Ansprüche, **dadurch gekennzeichnet, dass** die Montagemittel (115', 116', 125', 126', 135', 136') eine Schwalbenschwanzform aufweisen.

18. Kasten (100) nach einem beliebigen der vorausgehenden Ansprüche, **dadurch gekennzeichnet, dass** jede Querschiene (113, 123, 133) an jeder Längshalterung (111, 112, 121, 1222, 131, 132) jedes Moduls (11D, 120, 130) aufgesteckt wird.

19. Kasten (100) nach Anspruch 18, **dadurch gekennzeichnet, dass** jede Längshalterung jedes Moduls einen erhöhten Bereich (111C, 112C, 121C, 1222C, 131C, 132C) mit Befestigungsmitteln für die entsprechende Querschiene hat.

20. Kasten (100) nach einem der Ansprüche 18 und 19, **dadurch gekennzeichnet, dass** die Befestigungsmittel jeder Querschiene Mittel zum Schrauben sind.

21. Kasten (100) nach einem der vorausgehenden Ansprüche, **dadurch gekennzeichnet, dass** jede Längshalterung jedes Moduls Langlöcher (111A, 112A, 121A, 122A, 122A, 131A, 132A) für den Durchgang von Befestigungsschrauben des Kasten zu einer beliebigen Wand umfasst.

22. Kasten (100) nach einem der vorausgehenden Ansprüche, **dadurch gekennzeichnet, dass** jede Längshalterung jedes Moduls ein einziges Teil mit seinen Montagemitteln bildet.
